# EUROPÄISCHE PATENTSCHRIFT

(11) **EP 0 671 988 B1**
(45) Veröffentlichungstag und Bekanntmachung des Hinweises auf die Patenterteilung: **15.01.1997**
(21) Anmeldenummer: 94900713.2
(22) Anmeldetag: 22.11.1993
(51) Int. Cl.: B23H 9/16, B23H 9/00, G21C 19/307

(54) **VERFAHREN ZUM HERSTELLEN EINER SIEBPLATTE FÜR EINEN BRENNELEMENT-FUSS UND ENTSPRECHENDES BRENNELEMENT**
METHOD OF MANUFACTURING A FILTER PLATE FOR THE FOOT OF A NUCLEAR-FUEL ELEMENT, AND A FUEL ELEMENT FITTED WITH SUCH A FILTER PLATE
PROCEDE DE FABRICATION D'UNE PLAQUE PERFOREE POUR UN PIED D'ELEMENT COMBUSTIBLE, ET ELEMENT COMBUSTIBLE CORRESPONDANT

(30) Priorität: 02.12.1992 DE 4240537
(43) Veröffentlichungstag der Anmeldung: 20.09.1995
(73) Patentinhaber: SIEMENS AKTIENGESELLSCHAFT, 80333 München (DE)
(72) Erfinder: BEUERLEIN, Bernd, D-91052 Erlangen (DE)
(86) Internationale Anmeldenummer: DE9301106
(87) Internationale Veröffentlichungsnummer: WO9412307

(56) Entgegenhaltungen:
- EP-A- 0 422 950
- EP-A- 0 435 744
- EP-A- 0 512 137
- FR-A- 1 188 527
- GB-A- 1 162 648
- GB-A- 2 214 842
- US-A- 5 030 412

## Beschreibung

Verfahren zum Herstellen einer Siebplatte für einen Brennelement-Fuß und entsprechendes Brennelement

Die Erfindung betrifft ein Verfahren zum Herstellen einer Siebplatte für den Fuß eines Brennelementes mit einem dem Querschnitt des Fußes angepaßten Querschnitt der Platte und Sieböffnungen, die den Dimensionen von rückzuhaltenden Fremdkörpern angepaßt sind. Die Erfindung betrifft ferner Brennelemente mit einem zwischen einem Brennelement-Kopf und einem Brennelement-Fuß angeordneten Bündel von Brennstäben und einer im Brennelement-Fuß angeordneten Siebplatte, insbesondere Brennelemente mit den im Oberbegriff der Ansprüche 5, 7 und 9 (US-PS 5,030,412) angegebenen Merkmalen, wobei die Geometrie der den Kühlmittelstrom führenden Locher und Durchtrittsöffnungen in die einstückige Platte mittels eines derartigen, nicht-mechanischen Verfahrens zum Abtragen von Material eingearbeitet ist.

Es kann nicht vollkommen ausgeschlossen werden, daß in den Kühlmittelstrom, der zur Kühlung der Brennelemente durch den Kern eines Nuklearreaktors geführt wird, unter besonders unglücklichen Umstanden Fremdkörper gelangen. So können sich zum Beispiel aus der Fertigung stammende Metallspäne noch in den Wärmetauschern oder anderen Reaktorkomponenten befinden oder es können wahrend des Reaktorbetriebs abgebrochene Federn, Drahtstücke oder andere Bruchstücke anfallen. Solche Fremdkörper ("Debris") können vom Kühlmittelstrom zu den Maschen der Abstandhalter gespült werden, in denen die Brennstäbe innerhalb des Brennelements fixiert sind. Bei den heftigen Vibrationen, denen die Brennstäbe im Kühlmittelstrom ausgesetzt sind, kommt es dann zu Reibung ("Fretting") und Schäden, die zur Zerstörung von Brennstäben fuhren können.

Daher wird in letzter Zeit gefordert, derartige Fremdkörper durch ein entsprechendes Sieb in dem vom Kühlmittel durch strömten Fuß der Brennelemente abzufangen.

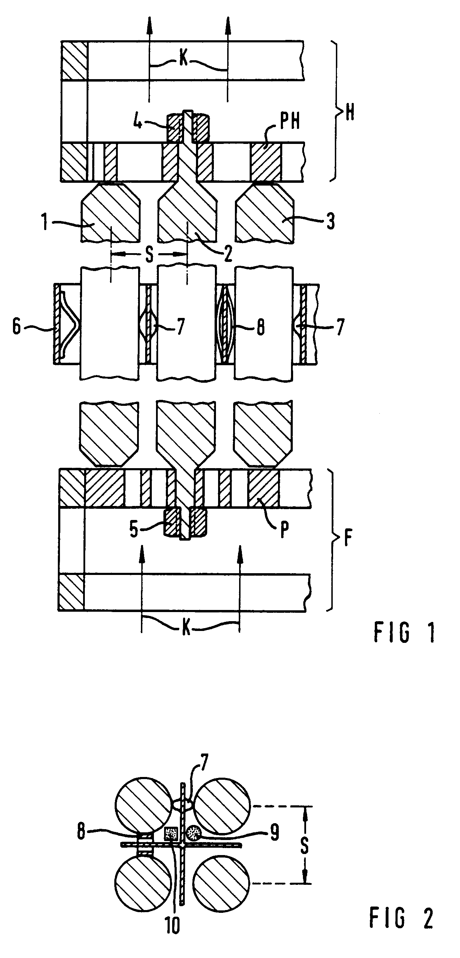

Figur 1 zeigt einen Längsschnitt durch den linken Teil eines wassergekühlten Brennelements, das in Richtung der Pfeile K vom Kühlmittelstrom durchflossen wird. Dabei ist ein Bündel von zueinander parallelen Brennstäben 1, 2, 3 zwischen einem Brennelement-Kopf H und einem Brennelement-Fuß F angeordnet. Bei Siedewasser-Brennelementen ist zum Beispiel der Brennstab 2 als tragender Stab ausgebildet, der über ein Gewinde mit Mutter 4 an einem oberen Endstück und ein anderes Gewinde mit Mutter 5 am unteren Endstück mit Stabhalteplatten PH, P im Brennelement-Kopf H und Brennelement-Fuß F verschraubt ist. Als Stütze eines Brennelements können aber statt tragender Brennstäbe auch Führungsrohre von Druckwasser-Brennelementen, Wasserrohre oder andere Strukturteile verwendet werden, die Kopf und Fuß des Brennelements so fixieren, daß die Brennstäbe dazwischen eingespannt sind. Seitlich sind die Brennstäbe in mehreren axialen Positionen durch Abstandhalter 6 fixiert, die aus gitterförmigen Stegen bestehen, an denen die Brennstäbe über Noppen 7 und Federn 8 abgestützt sind. Nicht dargestellt sind in Figur 1 Druckfedern, die einen Längenausgleich der Brennstäbe bei Temperaturschwankungen ermöglichen, und andere übliche Teile von Brennelementen, die für die Erfindung nicht von Bedeutung sind.

Figur 2 zeigt schematisch den Zwischenraum zwischen vier benachbarten Brennstäben sowie zwei sich in diesem Zwischenraum kreuzende Stege des Abstandhalters mit entsprechenden Noppen 7 und Federn 8. Mit 9 und 10 ist jeweils ein zylindrischer und ein quadratischer Fremdkörper dargestellt, dessen Querschnitt Abmessungen hat, bei denen sich der betreffende Fremdkörper, der von dem Kühlmittelstrom K durch das Brennemlent getrieben wird gerade noch nicht an den Abstandhaltern verfängt. Es ist also vorteilhaft, wenn im Brennelement-Fuß ein Sieb vorhanden ist, das aus dem Kühlmittelstrom jedenfalls Teilchen mit größeren Abmessungen heraussiebt, als sie für das Passieren der Abstandhalter als unbedenklich angesehen werden.

Die Stabhalteplatten müssen einerseits ausreichende Stabilität besitzen, dürfen andererseits im sie durchströmenden Kühlmittel keinen zu hohen Druckverlust hervorrufen. Daraus ergibt sich, daß die in den Platten vorgesehenen Durchtrittsöffnungen für den Kühlmittelstrom einen hinreichend großen Bruchteil des gesamten Brennelement-Querschnitts einnehmen, aber die Stege zwischen den Durchtrittsöffnungen eine ausreichende Breite und Dicke aufweisen müssen. Wird der untere Stabhalter auch noch benutzt, um aus dem Kühlmittelstrom die erwähnten Fremdkörper abzufangen, so muß der gesamte für den Kühlmitteldurchtritt im Fuß zur Verfügung stehende Strömungsquerschnitt auf entsprechend kleine und zahlreiche Durchtrittsöffnungen verteilt werden. Diese Forderung ist aber nur schwer zu realisieren.

So wird zum Beispiel häufig der Fuß als ein einstückiges, die Stabhalteplatte und einen entsprechenden Rahmen umfassendes Gußteil hergestellt. Schon bei den herkömmlichen Konstruktionen müssen diese Gußteile häufig nachgearbeitet werden. Je mehr Durchtrittsöffnungen vorgesehen und je schmaler die dazwischen liegenden Stege sind, um so größer wird der entsprechende Herstellungsaufwand. Eine mehrere Zentimeter dicke Stabhalteplatte mit dicht nebeneinander angeordneten Durchtrittsöffnungen, deren maximaler Durchmesser nach Fig. 2 nur etwa 3 mm ist, würde bei einem Gießverfahren in der Regel soviele Gießfehler aufweisen, daß deren nachträgliche Beseitigung nicht mehr wirtschftlich durchführbar ist.

Eine höhere Präzision kann erreicht werden, wenn die Stabhalteplatte zunächst ohne die Durchtrittsöffnungen hergestellt wird, die anschließend durch mechanisches Abtragen von Material in die Platte eingearbeitet werden. So können zum Beispiel entsprechend kleine Bohrungen in eine gewalzte, in den Rahmen des Fußteils einzusetzende Platte eingebracht werden. Auf diese Weise können aber nur geradlinig verlaufende Löcher mit rundem Querschnitt erzeugt werden.

In der US-PS 4,832,905 ist vorgeschlagen, den Stabhalter als ein Gitter aus vielen einander kreuzenden Stegen auszubilden. Dadurch entstehen feine Gittermaschen, die aus dem durchtretenden Kühlmittelstrom die störenden Teilchen aussieben. Die Stabilitätsforderungen erfordern dabei eine erhebliche Bauhöhe des Gitters, aufwendige Schweißnähte zwischen den Stegen des Gitters und besondere Befestigungen der Tragstäbe.

Häufiger wird vorgeschlagen, das erforderliche Aussieben der Fremdkörper im Brennelement-Fuß durch ein eigenes, oberhalb oder unterhalb der Stabhalteplatte angeordnetes Sieb zu erreichen. Nach der US-PS 4,678,627 ist im Brennelement-Fuß als Sieb ein aus gelochtem Blech gefertigter Korb angebracht. Nach der US-PS 4,684,495 ist das Sieb als ein grobmaschiges Gitter ausgebildet, wobei aber benachbarte Gittermaschen durch Öffnungen in den Gitterstegen miteinander verbunden sind und die Gitterstege Laschen tragen, die den direkten Strömungsweg durch die Gittermaschen versperren, so daß der Kühlmittelstrom in gewundenen Wegen, an deren Windungen Fremdkörper abgefangen werden, durch das Gitter geleitet wird.

In der US-PS 5,030,412 ist eine gitterförmige Siebplatte mit horizontalen Langsstegen beschrieben, die in der (vertikalen) Richtung des Kühlmittelstroms so wellenförmig gebogen sind, daß ein geradliniger Weg durch die Siebplatte versperrt ist. Diese Langsstege sind mit Querstäben zu einem Gitter mit rechteckigen Maschen verschweißt. Die Siebplatte ist unterhalb der Stabhalteplatte angeordnet, kann aber auch zusammen mit der Stabhalteplatte als integrales Gußteil hergestellt werden, wobei dann die gewellten Langsstege nicht mit Querstäben verschweißt, sondern an dem unteren Rand von einander kreuzenden Rippen angeformt sind, die ein Gitter mit langgestreckten, rechteckigen Maschen bilden und über die die Langsstege auf der Gitterunterseite hervorstehen. Die Rippen und Langsstege müssen verhältnismäßig stark sein und einen beträchtlichen Teil des Plattenquerschnitts einnehmen, so daß ihr Strömungswiderstand bis zu 50 % des Strömungswiderstand des ganzen Brennelements betragt.

Solche Sonderkonstruktionen sind sowohl für die Fertigung wie auch für den Platzbedarf im Brennelement-Fuß sehr aufwendig.

Der Erfindung liegt die Aufgabe zugrunde, die Herstellung einer entsprechenden Siebplatte für den Fuß eines Brennelements zu vereinfachen. Ferner liegt der Erfindung die Aufgabe zugrunde, für Brennelemente mit einem entsprechenden Teilchensieb eine vorteilhafte Ausführung des Siebes zu finden, die leicht herstellbar ist.

Die Erfindung sieht für den Fuß eines Brennelements eine Siebplatte vor, deren Querschnitt dem Querschnitt des Fußes und deren Sieböffnungen den Dimensionen von rückzuhaltenden Fremdkörpern angepaßt sind, wobei beim Herstellen der Siebplatte die Sieböffnungen auf elektrochemischem Wege derart in die Platte hineingearbeitet werden, daß Öffnungsquerschnitte mit Ecken entstehen, wie im Anspruch 1 angegeben ist.

Damit können auf verhältnismäßig einfache Weise einstückige Platten mit Durchtrittsöffnungen hergestellt werden, deren Geometrie mit herkömmlichen mechanischen Methoden nicht oder nur schwer erreichbar ist. In den Brennelementfüßen können diese Platten insbesondere als Stabhalteplatten dienen, die die Brennstäbe (oder wenigstens die tragenden Strukturteile, z. B. Führungsrohre oder einen Teil der Brennstäbe) halten.

Vorteilhaft können die Öffnungen auf einem Teil ihrer Länge von der Oberseite der Platte aus, auf einem anderen Teil ihrer Länge von der Unterseite der Platte aus in die Platte eingearbeitet werden. Insbesondere können dabei die Durchtrittsöffnungen von der Oberseite der Platte aus mit einer anderen Geometrie eingearbeitet werden als von der Unterseite aus. Dadurch entstehen Durchtrittsöffnungen in Form von Kanälen, die jeweils aus mindestens zwei aneinander anschließenden, aber vollkommen unterschiedlich geformten Kanalteilen bestehen können.

Die Erfindung besteht daher in einem Verfahren nach dem Anspruch 1. Dieses Verfahren ermöglicht insbesondere, Siebplatten für erfindungsgemäße Brennelemente nach den Ansprüchen 5, 7, 9 oder 12 herzustellen.

Ein Brennelement nach der Erfindung weist also ein zwischen einem Brennelement-Kopf und einem Brennelement-Fuß angeordnetes Bündel zueinander paralleler Brennstäbe auf, bei dem der Brennelement-Fuß eine Platte mit Durchtrittsöffnungen für einen Kühlmittelstrom enthalt und wobei die Durchtrittsöffnungen von der Unterseite zur Oberseite der Platte führen und eine den Abmessungen der aus dem Kühlmittelstrom auszusiebenden Fremdkörper entsprechende Größe aufweisen. Diese Platte kann als ein einziges, um Beispiel gegossenes oder gewalztes Stück sich über den gesamten Bündelquerschnitt erstrecken und am Brennelementfuß angeformt oder angeschweißt sein; sie kann aber auch aus mehreren einstückigen Teilplatten zusammengesetzt werden, die im Fuß nebeneinander angeordnet werden.

Die Form der Durchtritts öffnungen ist nicht mehr auf eine Geometric beschränkt, die sich durch Bohren in einstückigen Platten herstellen läßt. Vielmehr können nunmehr auch andere, insbesondere den Anforderungen an die Stabhalteplatten in Brennelementfüßen besser genügende Geometrien erreicht werden.

So hat bevorzugt mindestens ein Teil der Durchtrittsöffnungen wenigstens in einem Teilbereich zwischen der Unterseite und der Oberseite einen polygonalen Querschnitt.

Nach einer Variante der Erfindung sind in der Platte als Durchtrittsöffnungen verhältnismäßig große Löcher (insbesondere kreisförmige Löcher) vorgesehen, die in mindestens zwei zwischen der Oberseite und der Unterseite der Platte liegenden Ebenen von separaten Stegen durchsetzt sind, wobei die Stege der einen Ebene gegenüber den Stegen der anderen Ebene geometrisch anders angeordnet, zum Beispiel versetzt sein können. Diese und weitere Merkmale der Erfindung sind in den Ansprüchen gekennzeichnet und im Folgendem näher beschrieben.

Anhand von 15 Figuren und mehreren Ausführungsbeispielen wird die Erfindung näher erläutert. Es zeigen:
Figur 1 den bereits erläuterten Längsschnitt durch die linke Seite eines Brennelements,
Figur 2 die räumlichen Verhältnisse im Zwischenraum zwischen vier benachbarten Brennstäben,
Figur 3 das Schema einer Anlage zum elektrochemischen Senken ("electrochemical machining"),
Figur 4 und Figur 5 zwei Ausführungsbeispiele von Werkstücken und Werkzeugen für elektrochemisches Senken,
Figur 6 und Figur 7 zwei Siebplattengeometrien mit eckigen Durchtrittsöffnungen,
Figur 8 und Figur 9 Längsschnitte durch zwei Siebplatten mit Stegen, die von der Unterseite bis zur Oberseite der Platte reichen,
Figur 10 Querschnitt und Längsschnitt durch eine Siebplatte mit kreisrunden Löchern, die auf einem Teil ihrer Länge von Stegen durchsetzt sind,
Figur 11 und Figur 12 Aufsicht und Längsschnitt durch eine Siebplatte mit Löchern und zwei gegeneinander versetzten Sätzen von Stegen, die die Löcher in zwei übereinander liegenden Ebenen durchsetzen,
Figur 13 und Figur 14 ähnliche Siebplatten, bei denen die beiden Sätze der Stege noch unterschiedlichere Geometrien aufweisen, und
Figur 15 einen Plattenteil mit gewundenen Durchtrittskanälen.

Im Maschinenbau ist es seit einigen Jahren bekannt, daß metallischem Halbzeug für Maschinenteile durch gezielte elektrolytische Auflösung des Metalls eine komplizierte Geometrie gegeben werden kann. Dabei handelt es sich um Bearbeitungsmethoden, die bisher nur in Sonderfällen eingesetzt und zum Beispiel als "elektrochemisches Senken" ("electrochemical machining" / ECM) bekannt sind.

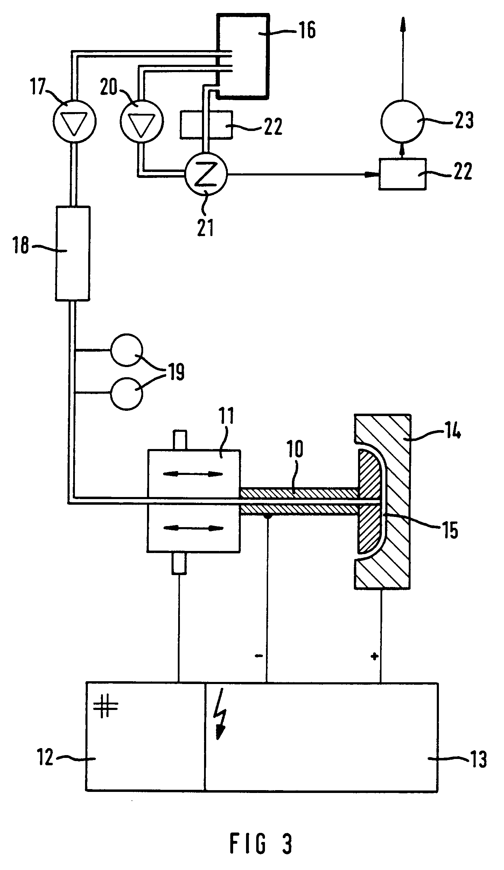

Das Schema einer derartigen ECM-Anlage umfaßt nach Figur 3 eine Elektrode 10, die von einer mittels einer Steuereinrichtung 12 gesteuerten Vorschubeinrichtung 11 auf ein Werkstück 14 gesetzt wird. Elektrode 10 und Werkstück 14 sind an einen Gleichspannungsgenerator 13 angeschlossen.

In den Spalt 15 zwischen Elektrode und Werkstück wird ein Elektrolyt geleitet, in dem sich das Metall des Werkstücks 14 entsprechend dem Vorschub und der Form der Elektrode 10 auflöst.

Der Elektrolyt-Kreislauf ist in Figur 3 durch einen Elektrolyt-Tank 16, eine Förderpumpe 17, ein Filter 18 sowie Meßinstrumente 19 für Druck und Temperatur des Elektrolyten angedeutet. Parallel dazu kann eine Pumpe 20 einen weiteren Kreislauf antreiben, der über eine Zentrifuge 21 und einen Wärmetauscher 22 führt und für einen ausreichenden Vorrat an temperiertem, gereinigtem Elektrolyt sorgt.

Die Ionen des gelösten Metalls bilden im Elektrolyt einen Schlamm, der durch die Zentrifuge 21 abgeschieden, in eine Filterpresse 22 abgepumpt und einer weiteren Station 23 zum Wiederaufbereiten oder Entsorgen zugeführt werden kann.

Entsprechende kommerzielle Bearbeitungsstationen werden von Spezialfirmen angeboten (vgl. den Sonderdruck aus dem Haus der Technik e.V., Essen 1984: "Elektrochemisches Senken (ECM) in der Anwendung" von G. Pielorz, Maschinenfabrik Köppern, Hattingen).

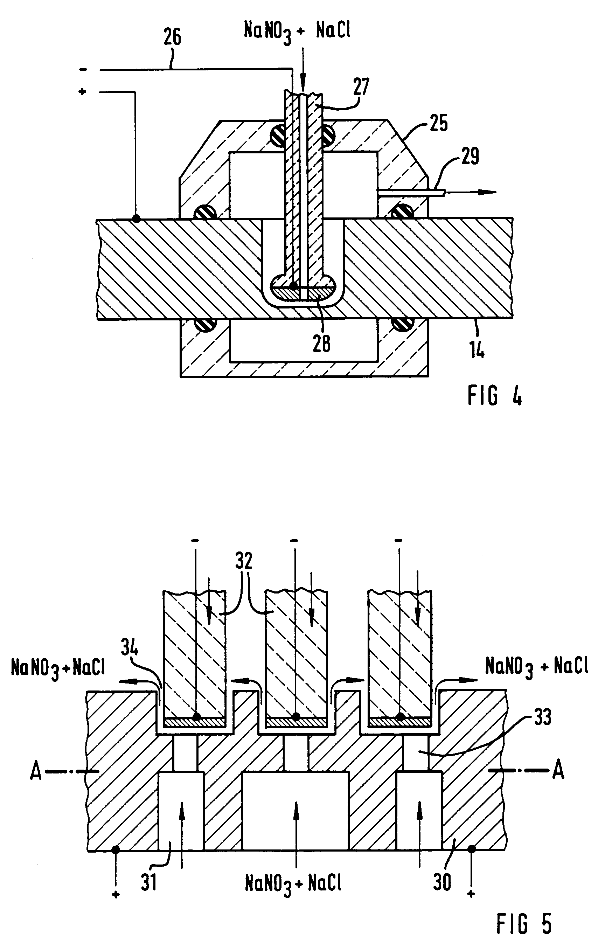

Gemäß Figur 4 kann der Elektrolyt-Kreislauf durch eine Arbeitskammer 25 geführt werden, die an der Bearbeitungsstelle druckdicht auf das Werkstück 14 aufgesetzt werden kann. Das metallische Werkstück selbst ist als Anode mit einem Gleichstrom zwischen etwa 0,5 und 5 A/mm² gespeist, während der Kathodenanschluß zusammen mit einer Vorschubstange 27 in die Arbeitskammer geführt ist. Als Kathode werden dabei Profilteile 28 aus Metallen, wie Kupfer oder Stahl oder auch aus Graphit, verwendet, wobei die Elektrode nach Figur 4 einen inneren Spülkanal aufweist, durch den der Elektrolyt (zum Beispiel Natriumnitrat und/oder Natriumchlorid) mit einem Druck zwischen 5 und 20 bar in den Spalt zwischen Elektrode 28 und Werkstück 14 gepreßt wird. Bei ElektrolytTemperaturen zwischen etwa 30 und 50 °C und Arbeitsspannungen zwischen 7 und 20 Volt können Vorschubgeschwindigkeiten bis zu 5 mm/min erreicht werden. Die Elektrode prägt dabei ihr Profil dem Werkstück mit einer Genauigkeit von etwa 0,1 mm auf. Der verbrauchte Elektrolyt wird über eine Abfuhr-Leitung 29 abgeführt.

Der Elektrolyt kann auch in Umkehrung der Strömungsrichtung durch einen Strömungskanal in der Elektrode 28 abgeführt werden oder er kann auf eine andere Weise, zum Beispiel quer zur Vorschubrichtung, über die Bearbeitungsstelle geleitet werden.

Mit diesem Verfahren der elektrochemischen Auflösung können große Materialmengen in verhältnismäßig kurzen Zeiten abgetragen werden. Im Gegensatz zu anderen Abtragungsmethoden, zum Beispiel der Funkenerosion, tritt dabei praktisch kein Verschleiß an dem Werkzeug (Elektrode) auf. Mechanische Kräfte, die das Werkstück verformen könnten, oder chemische Einflüsse, die die Zusammensetzung und Kontur des Materials ändern könnten, treten dabei nicht auf. Insbesondere spielt die Härte des Werkstücks, die bei mechanischer Bearbeitung unter Umständen Sonderwerkzeuge erfordert, keine Rolle. Werkstücke bis zu einem Durchmesser von 50 cm können problemlos bearbeitet werden.

Allerdings ist eine ECM-Bearbeitungsanlage im Vergleich zu anderen Bearbeitungsstationen verhältnismäßig teuer. Auch kann die Optimierung der Kathodenform verhältnismäßig aufwendig sein, wodurch Serien mit kleinen Stückzahlen aufwendig werden.

Für die Herstellung komplizierterer Geometrien kann es günstig sein, die Erstellung des benötigten Sieb-Profils in mehreren Arbeitsschritten vorzunehmen. So ist in Figur 5 angenommen, daß in einem vorbereitenden Arbeitsschritt Kleine, durch die ganze Plattendicke sich erstreckende Führungskanäle 33 eingearbeitet wurden, die dann anschließend von der Unterseite her durch entsprechend große Kathoden bis zu einer durch die Ebene A-A gekennzeichneten Tiefe aufgeweitet wurden. In dem unterhalb der Ebene A-A liegenden Teil der einstückigen Platte 30 sind daher verhältnismäßig breite Kanäle 31 von unten eingearbeitet. Mittels der Kathoden 32 werden die verbleibenden Teile der kleinen Führungskanäle 33 nunmehr auch von der Oberseite her aufgeweitet, wodurch in die Platte 30 auch in ihrem oberen Teil Durchtrittskanäle 34 eingearbeitet werden, die sich nunmehr von den Kanälen 31 der Unterseite in ihrer geometrischen Gestalt unterscheiden können. Werden die Elektroden 32 bis über die Ebene A-A hinabgesenkt, so entstehen dadurch Durchtrittsöffnungen mit komplizierten Profilen.

Figur 5 zeigt ferner eine Führung des Elektrolyt-Stroms` die ohne entsprechende Zuführungskanäle in den Elektroden auskommt. Da der Vorschub der Elektroden nicht zwangsläufig senkrecht zur Platte erfolgen muß, sondern die Elektrode auch schräg oder seitlich verfahren werden kann, können praktisch alle Formen von Durchtrittsöffnungen in eine Platte eingearbeitet werden.

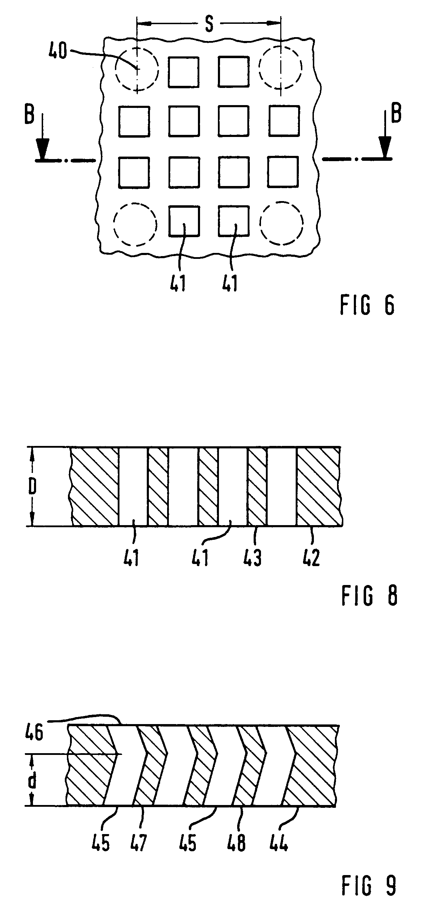

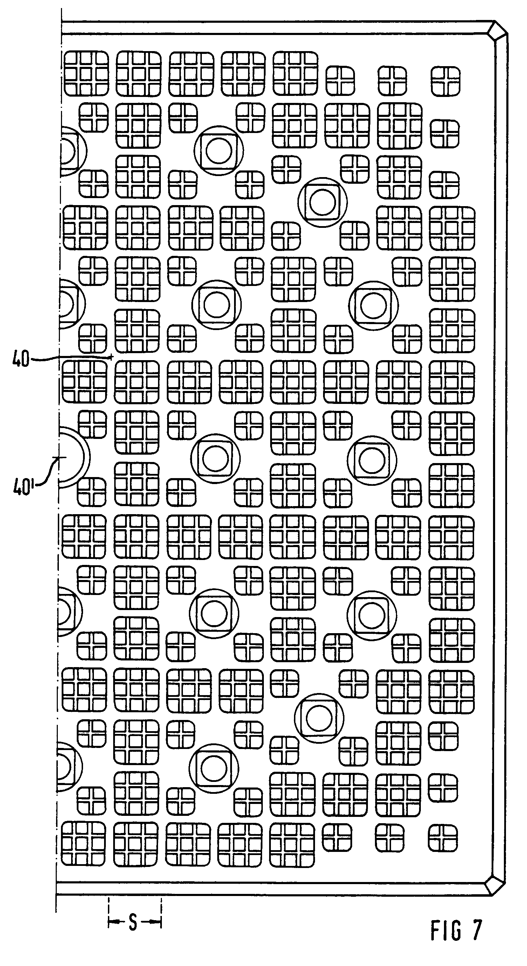

In Figur 6 und 7 ist mit S die "Stabteilung" der Brennelemente, das heißt der Abstand zwischen einer Brennstabachse und der Achse des benachbarten Brennstabes oder Führungsrohres, angegeben. Die diesen Achsen entsprechenden Positionen 40, 40' der Siebplatte 30 dienen als Anschlag oder zur Befestigung der Brennstäbe oder Führungsrohre und stehen daher für Durchtrittsöffnungen nur beschränkt zur Verfügung.

Figur 6 zeigt, wie der Abstand S zwischen diesen Positionen durch quadratische Durchtrittsöffnungen 41 ausgenutzt ist. Würden gebohrte` also kreisrunde Durchtrittsöffnungen verwendet, so würde die für eine gleiche mechanische Stabilität erforderliche Breite der zwischen den Öffnungen verbleibenden Stege nur Durchtrittsöffnungen zulassen, deren Querschnittsflächen insgesamt einen deutlich geringeren Strömungsquerschnitt bilden.

Figur 7 zeigt eine Aufsicht auf eine halbe, durch den Brennelementfluß sich erstreckende Siebplatte, wobei die zur Verfügung stehende Fläche zwischen den Positionen 40' von Führungsrohren oder Haltestäben im Hinblick auf die erforderliche Stabilität und auf eine ausreichende Verteilung des Kühlmittelstroms mit eckigen Durchtrittsöffnungen 41 belegt ist.

Figur 8 zeigt einen Schnitt längs der Linie BB der Siebplatte nach Figur 6. Die Durchtrittsöffnungen 41 können in einem Arbeitsgang von einer Seite der Platte her eingesenkt werden. Dann bildet die Platte 42 Stege 43, die sich geradlinig über die ganze Länge der Durchtrittsöffnungen` das heißt durch die Dicke D der Platte, erstrecken.

In die Platte 44 der Figur 9 wurden zunächst von der Unterseite her Kanäle 45 eingesenkt, um anschließend bis zur Tiefe d der Oberseite her entsprechende Kanäle 46 einzuarbeiten. Die Vorschubrichtungen bei beiden Arbeitsgängen bilden dabei einen Winkel, so daß entsprechend gewinkelte Durchtrittsöffnungen in der Platte entstehen: Die von der Platte 44 zwischen den Durchtrittsöffnungen gebildeten Stege 48 können sich zwar in der Siebplatten-Ebene (das heißt Zeichenebene der Figur 8) geradlinig erstrecken und gegenseitig kreuzen, senkrecht zur Plattenebene sind sie aber geknickt oder gewinkelt.

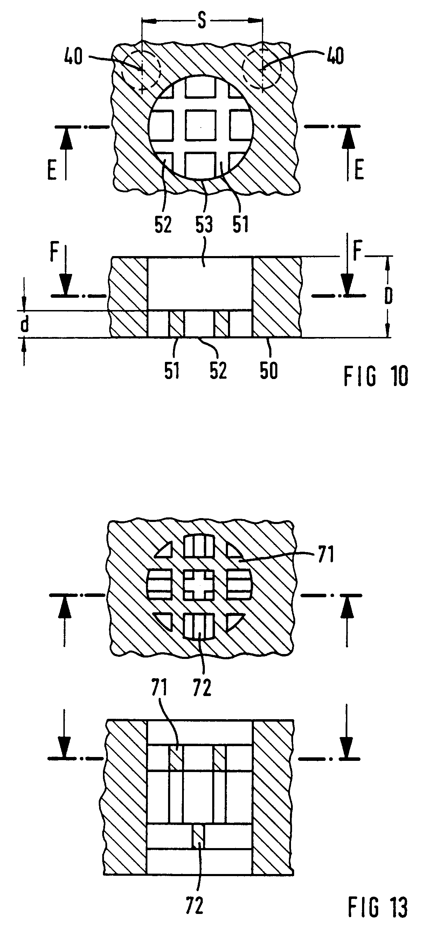

Figur 10 zeigt im oberen Teil den Querschnitt, im unteren Teil den Längsschnitt durch eine ebenfalls in zwei Arbeitsgängen erzeugte Siebplatte, wobei die Linien EE und FF die jeweiligen Schnittebenen angeben.

Hierbei sind in die Platte 50 in einem Arbeitsgang Kanäle 52 eingearbeitet, so daß die Platte 50 zwischen diesen Kanälen 52 geradlinige, sich kreuzende Stege 51 bildet. Vor oder nach diesem Arbeitsgang ist aber in einem anderen Arbeitsgang von der Oberfläche her ein mehrere Kanäle 52 überdeckendes Loch 53 eingearbeitet, das jeweils als ein gemeinsames Öffnungsteil mehrere Durchtrittsöffnungen (Kanäle 52) mit der Oberseite verbindet. Die von der Platte gebildeten Stege 51 erstrecken sich dann also nur über den Teil d der Durchtrittsöffnungen, deren gesamte Länge D beträgt. Während die Löcher 53 rund sein können, weisen die Querschnitte an mehrern Durchschnittsöffnungen Ecken auf, die durch die geradlinigen, schmalen Stege 51 entstehen.

Die Größe der Löcher 53 und deren Verteilung auf der Siebplatte sind unabhängig von den Dimensionen der rückzuhaltenden Fremdkörper so gewählt, daß die gewünschte Tragfähigkeit der Siebplatte 50 sichergestellt ist. Die Platte 50 bildet aber wenigstens in einer Ebene zwischen der Oberfläche und der Unterfläche der Platte die geradlinigen Stege 51, die die großen Löcher, entsprechend den Abmessungen der rückzuhaltenden Fremdkörper, unterteilen. Der von diesen Stegen 51 hervorgerufene Druckverlust bleibt gering.

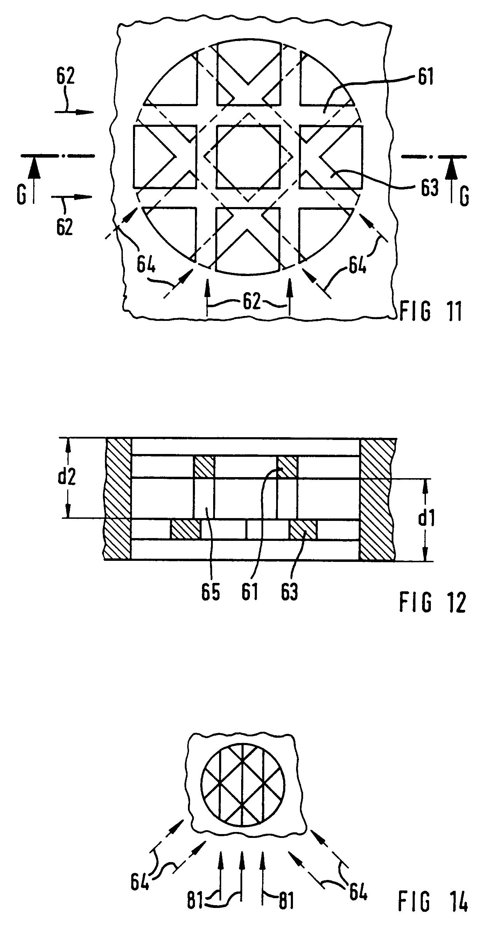

In Figur 11 ist die Aufsicht auf eine andere, ebenfalls in mehreren Arbeitsgängen gebildete Siebplatte gezeigt, und Figur 12 zeigt einen Längsschnitt längs der Ebene GG in Figur 11. Dabei ist ersichtlich, daß die Siebplatte ein Loch (vorzugsweise ein rundes Loch) trägt, das in zwei übereinander liegenden Ebenen zwischen der Plattenoberseite und der Plattenunterseite von Stegen, vorzugsweise geraden, sich kreuzenden Stegen, durchsetzt wird. In der oberen dieser beiden Ebenen bildet die Platte die vier Stege 61, die sich längs der Pfeile 62 erstrecken, während die Stege 63 der unteren Ebene längs der Pfeile 64 verlaufen. Die Stege 61 und die dazwischen gebildeten Durchtrittskanäle entsprechen dabei der Geometrie der Kanäle in Figur 10, während die Stege 63 der anderen Ebene eine dazu konzentrische, aber um 45° versetzte Geometrie aufweisen.

Die derart gestalteten Durchtrittsöffnungen weisen zwar eine komplizierte Geometrie auf, sind jedoch leicht herzustellen. Hierzu genügt es, zunächst von einer Seite, zum Beispiel der Unterseite, die den Stegen 63 entsprechenden Kanäle bis in die Tiefe d1 in die Platte einzuarbeiten. Anschließend wird das Werkzeug um 45° gedreht und oben auf die Platte aufgesetzt, um die entsprechenden, die Stege 61 bildenden Kanäle von oben bis zu einer Tiefe d2 in die Platte einzuarbeiten. Im Überlappungsbereich der beiden Bearbeitungstiefen d1 und d2 bleiben somit von dem Material der Siebplatte nur noch stiftähnliche Reste 65 stehen, die die Stege 61 der oberen Stegebene mit den Stegen 63 der unteren Stegebene verbinden. Im Bereich der Oberseite und/oder Unterseite der Siebplatte kann das Material der Stege 61 und 63 zusätzlich abgetragen werden, so daß die Stege 61 und 63 gegenüber der Oberseite und Unterseite der Platte zurückgesetzt und geschützt sind.

Die in Figur 5 dargestellte Position des Werkzeugs im Werkstück entspricht der Herstellung einer Siebplatte nach Figur 12, bei der die beiden Eintauchtiefen d1 und d2 jeweils der Hälfte der Plattendicke D entsprechen. Nach Fertigstellung weist diese Platte dann ebenfalls die in Figur 11 gezeigte Aufsicht auf, jedoch liegt dann der Satz sich kreuzender Stege 63 unmittelbar unter dem Satz der sich kreuzenden Stege 61. Dadurch erhöht sich die Stabilität der die runden Löcher durchsetzenden Stege, gleichzeitig tritt aber auch eine geringe Erhöhung des Druckabfalls auf.

Figur 13 zeigt eine ganz ähnliche Siebplatte, bei der aber die Durchtrittsöffnungen bzw. -kanäle derart aus der Platte herausgearbeitet sind, daß in einer oberen Zwischenebene vier gitterförmig angeordnete Stege 71, in einer darunter angeordneten Ebene aber nur zwei sich kreuzende Stege 72 vorgesehen sind, also in beiden Ebenen eine vollkommen andere Geometrie vorliegt.

Figur 14 zeigt schematisch den Aufriß eines Loches, bei dem die sich in einer Ebene kreuzenden Stege 61 bzw. 71 der Figuren 11 und 13 durch geradlinige, zueinander parallele Stege längs der Pfeile 81 ersetzt sind, während in der anderen Ebene die längs der Pfeile 64 in Figur 11 vorgesehenen Stege beibehalten sind.

Den Durchtrittskanälen der Figuren 9 bis 14 ist gemeinsam, daß die Durchtrittsöffnungen sich dabei nicht mit konstantem Querschnitt geradlinig durch die Siebplatte erstrecken, sondern Verengungen, Versetzungen und/oder Abknickungen aufweisen, so daß auch Drahtstücke und andere längliche Fremdkörper mit Kleinem Querschnitt darin abgefangen werden. Alle diese Geometrien können in eine einstückige Platte eingearbeitet werden, was den Zeit- und Arbeitsaufwand bei der Fertigung erheblich verringert.

Dies trifft auch für Durchtrittskanäle zu, die eine kontinuierlich gekrümmte Verbindung der Plattenunterseite mit der Plattenoberseite bilden, insbesondere eine schraubenförmige um eine Achse oder ähnlich räumlich gewundene Verbindung.

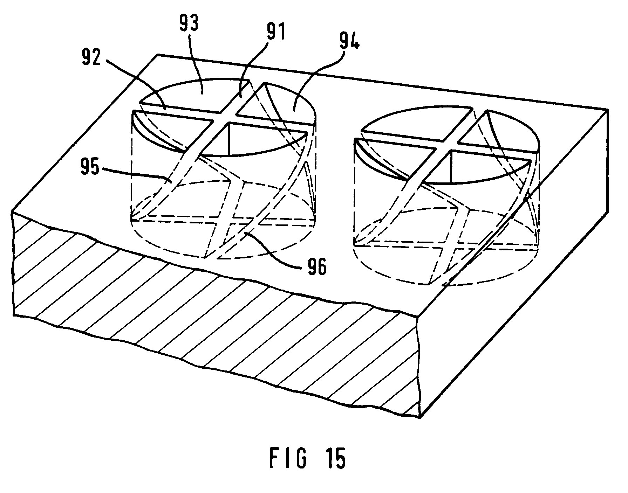

So kann zum Beispiel das Werkzeug zum elektrochemischen Senken Elektroden aufweisen, die Sektoren einer Kreisfläche darstellen und beim Aufsetzen auf die Plattenoberfläche ein etwa kreisförmiges, von Stegen 91, 92 in Sektoren unterteiltes Loch erzeugen, wie in Figur 15 an einem Stück einer derartigen Platte schematisch gezeigt ist. Jedoch werden die Durchtrittskanäle 93, 94 nicht durch einen linearen Vorschub der Elektroden in die Platte hineingearbeitet, wodurch geradlinige Durchtrittskanäle erzeugt würden. Vielmehr sind die Elektroden selbst korkenzieherartig ausgebildet und werden durch eine Überlagerung einer Drehbewegung mit einer linearen Vorschubbewegung in die Platte eingesenkt.

Dadurch entstehen schraubenartig gewundene Durchtrittsöffnungen, wie durch die entsprechenden spiralförmigen Linien 95 und 96 in Figur 15 angedeutet ist.

Während die komplexen Geometrien der Figuren 12 bis 15 praktisch nur noch durch nicht-mechanische Methoden der Materialabtragung erreichbar sind, könnten prinzipiell die einfacheren Geometrien der Figuren 6 bis 11 auch auf andere Weise erzeugt werden. Dies scheitert aber in der Praxis an den für derartige Siebplatten nötigen Abmessungen. So sind bei herkömmlichen Brennelementen mit einer Stabteilung von 2 bis 3 cm zum Beispiel quadratische Sieböffnungen mit etwa 3 mm Seitenlänge zweckmäßig. Für die schmalen Stege der Figuren 7 bis 15 ist dann eine Stegdicke von höchstens etwa 0,8 mm möglich, da die mechanische Stabilität der Siebplatte ja auch noch dickere, tragfähigere Stege erfordert, die die von Tragstäben, Führungsrohren oder anderen Strukturteilen ausgehenden Kräfte aufnehmen müssen. Bei einer dadurch geforderten Dicke der Siebplatte von einigen Zentimetern scheiden Stanz- oder Verformungsverfahren aus. Gegossene Platten dieser Geometrien zeigen praktisch unvermeidliche Gußfehler und müssen derartig aufwendig und umfangreich nachgebessert werden, daß eine Siebplatte als Teil des tragenden Skeletts des Brennelements auf diese Weise praktisch nicht wirtschaftlich herstellbar ist.

Das elektrochemische Senken jedoch ermöglicht es, die einander widersprechenden Anforderungen (großer Durchtrittsquerschnitt für Kühlmittel, Kleine Sieböffnungen zum Abfangen der Fremdkörper, massive Konstruktion zum Aufnehmen von Tragkräften) auf verschiedene vorteilhafte Weise, ohne übermäßigen Fertigungsaufwand zu erfüllen.

## Patentansprüche

1. Verfahren zum Herstellen einer Siebplatte (14)für den Fuß eines Brennelements mit einem dem Querschnitt des Fußes angepaßten Querschnitt der Platte (14) und den Dimensionen von rückzuhaltenden Fremdkörpern angepaßten Sieböffnungen (41),
**dadurch gekennzeichnet**, daß die Sieböffnungen (41) in die Platte (14) auf elektrochemischem Weg derart hineingearbeitet werden, daß mindestens ein Teil der Sieböffnungen (41) wenigstens in einem Teilbereich zwischen der Unterseite und der Oberseite der Platte (41) einen Querschnitt haben, der Ecken aufweist.

2. Verfahren nach Anspruch 1,
**dadurch gekennzeichnet**, daß die Sieböffnungen auf einem Teil (34) ihrer Länge von der Oberseite der Platte (14, 30) auf einem anderen Teil (31) ihrer Länge von der Unterseite der Platte aus in die Platte hineingearbeitet werden.

3. Verfahren nach Anspruch 2,
**dadurch gekennzeichnet**, daß die Sieböffnungen von der Oberseite der Platte aus mit einer anderen Geometrie in die Platte hineingearbeitet werden als von der Unterseite aus.

4. Verfahren nach einem der Ansprüche 1 bis 3,
**dadurch gekennzeichnet**, daß die Sieböffnungen derart eingearbeitet werden, daß jeweils mehrere Öffnungen (52) über einem gemeinsamen Öffnungsteil (53) mit einer Seite der Platte verbunden sind.

5. Brennelement für einen Kernreaktor mit einem zwischen einem Brennelement-Kopf (H) und einem Brennelement-Fuß (F) gehaltenen Bündel von in Reihen und Spalten regelmäßig nebeneinander angeordneten, zueinander parallelen Brennstäben (1, 3) und mit tragenden Strukturelementen wie z.B. Führungsrohren oder tragenden Brennstäben (2), mit folgenden Merkmalen:
Der Brennelement-Fuß enthalt eine wenigstens einige Strukturelemente tragende, sich praktisch über den Bündelquerschnitt erstreckende, einstückige oder aus nebeneinander liegende Teilplatten zusammengesetzte Siebplatte (42, P) und von der Unterseite zur Oberseite der Platte (42) fuhren Durchtrittsöffnungen (41, 45, 93) für einen Kühlmittelstrom, deren Abmessungen entsprechend den Abmessungen von aus dem Kühlmittelstrom auszusiebenden Fremdkörpern gewählt sind und deren Querschnitt Ecken aufweist,
**dadurch gekennzeichnet**, jeweils mehrere in einem Zwischenraum (s) zwischen vier Brennstäben oder Strukturelementen mündende, getrennt voneinander von der Unterseite zur Oberseite fuhrende Durchtrittsöffnungen mit einem gleichmäßig durchgehenden Querschnitt.

6. Brennelement nach Anspruch 5,
**dadurch gekennzeichnet**, daß die Durchtrittsöffnungen quadratisch sind und sich unterhalb der Brennstabachsen keine Durchtrittsöffnungen befinden.

7. Brennelement für einen Kernreaktor mit einem zwischen einem Brennelement-Kopf (H) und einem Brennelement-Fuß (F) gehaltenen Bündel von in Reihen und Spalten regelmäßig nebeneinander angeordneten, zueinander parallelen Brennstäben (1, 3) und mit tragenden Strukturelementen wie z.B. Führungrohren oder tragenden Brennstäben (2), mit folgenden Merkmalen:
Der Brennelement-Fuß enthält eine wenigstens einige Strukturelemente tragende, sich praktisch über den Bündelquerschnitt erstreckende, einstückige oder aus nebeneinander liegende Teilplatten zusammengesetzte Siebplatte (42, P) und von der Unterseite zur Oberseite der Platte (42) führen Durchtrittsöffnungen (41, 45, 93) für einen Kühlmittelstrom, deren Abmessungen entsprechend den Abmessungen von aus dem Kühlmittelstrom auszusiebenden Fremdkörpern gewählt sind und deren Querschnitt Ecken aufweist,
**gekennzeichnet durch** durchgehende Löcher (53) mit einem dem Abstand (S) der Brennstäbe angepaßten, ungefähr runden oder annähernd quadratischen Querschnitt, die in einem Teilbereich zwischen der Unterseite und der Oberseite durch aus der Platte ausgearbeitete ebene Stege (51) in die Durchtrittsöffnungen (52) unterteilt sind.

8. Brennelement nach Anspruch 7,
**dadurch gekennzeichnet**, daß die Löcher quadratisch sind und sich unterhalb der Brennstabachsen (40) keine Löcher befinden.

9. Brennelement für einen Kernreaktor mit einem zwischen einem Brennelement-Kopf (H) und einem Brennelement-Fuß (F) angeordneten Bündel zueinander paralleler Brennstäbe (1, 2, 3), mit folgenden Merkmalen:
Der Brennelement-Fuß enthalt eine sich praktisch über den Bündelquerschnitt erstreckende, einstückige oder aus nebeneinander liegenden Teilplatten zusammengesetzte Siebplatte, und von der Unterseite zur Oberseite führen Löcher für einen Kühlmittelstrom, deren Abmessungen entsprechend den Abmessungen von aus dem Kühlmittelstrom auszusiebenden Fremdkörpern gewählt sind,
**dadurch gekennzeichnet**, daß die Löcher mindestens in zwei zwischen der Unterseite und der Oberseite liegenden Ebenen von unterschiedlichen Stegen (71, 72) durchsetzt sind.

10. Brennelement nach Anspruch 9,
**dadurch gekennzeichnet**, daß die Stege (61, 62) der einen Ebene gegenüber den Stegen (63, 64) der anderen Ebene geometrisch anders angeordnet, insbesondere versetzt sind.

11. Brennelement nach Anspruch 9 oder 10,
**dadurch gekennzeichnet**, daß die Löcher praktisch rund sind.

12. Brennelement für einen Kernreaktor mit einem zwischen einem Brennelement-Kopf und einem Brennelement-Fuß angeordneten Bündel zueinander paralleler Brennstäbe, einer im Brennelement-Fuß sich praktisch über den Bündelquerschnitt erstreckenden einstückigen oder aus Teilplatten zusammengesetzten Siebplatte und von der Unterseite zur Oberseite der Platte führenden kontinuierlich gekrümmten Durchtrittskanälen (93, 94).

## Claims

1. Process for the production of a screen plate (14) for the foot of a fuel element, with a cross-section of the plate (14) matched to the cross-section of the foot and with screen apertures (41) matched to the dimensions of foreign bodies to be retained, characterized in that the screen apertures (41) are worked into the plates (14) electrochemically, in such a way that at least some of the screen apertures (41) have a cross-section which has corners at least in a part region between the underside and the topside of the plate (41).

2. Process according to Claim 1, characterized in that the screen apertures are worked into the plate over part (34) of their length from the topside of the plate (14, 30) and over another part (31) of their length from the underside of the plate.

3. Process according to Claim 2, characterized in that the screen apertures are worked into the plate from the topside of the plate with a different geometry from that worked in from the underside.

4. Process according to one of Claims 1 to 3, characterized in that the screen apertures are worked in in such a way that, in each case, a plurality of apertures (52) are connected to one side of the plate via a common aperture part (53).

5. Fuel element for a nuclear reactor, with a bundle of mutually parallel fuel rods (1, 3), held between a fuel-element head (H) and a fuel-element foot (F) and arranged regularly next to one another in rows and columns, and supporting structural elements, such as, for example guide tubes or supporting fuel rods (2), having the following features:
the fuel-element foot contains a screen plate (42, P) which supports at least some structural element sand extends virtually over the bundle cross-section and which is in one piece or is composed of part plates located next to one another, and
passage apertures (41, 45, 93) for a coolant stream lead from the underside to the topside of the plate (42), the dimensions of which apertures are selected according to the dimensions of foreign bodies to be screened out from the coolant stream and the cross-section of which has corners,
characterized by, in each case, a plurality of passage apertures having a uniformly continuous cross-section which open out in an interspace (s) between four fuel rods or structural elements and which lead separately from one another from the underside to the topside.

6. Fuel element according to Claim 5, characterized in that the passage apertures are quadratic, and no passage apertures are located underneath the fuel-rod axes.

7. Fuel element for a nuclear reactor, with a bundle of mutually parallel fuel rods (1, 3), held between a fuel-element head (H) and a fuel-element foot (F) and arranged regularly next to one another in rows and columns, and supporting structural elements, such as, for example, guide tubes or supporting fuel rods (2), having the following features:
the fuel-element foot contains a screen plate (42, P) which supports at least some structural elements and extends virtually over the bundle cross-section and which is in one piece or is composed of part plates lying next to one another, and
passage apertures (41, 45, 93) for a coolant stream lead from the underside to the topside of the plate (42), the dimensions of which apertures are selected according to the dimensions of foreign bodies to be screened out from the coolant stream and the cross-section of which has corners,
characterized by continuous holes (53) having an approximately round or approximately quadratic cross-section matched to the distance (S) between the fuel rods, which holes are subdivided, in a part region between the underside and the topside, into the passage apertures (52) by plane webs (51) worked out from the plate.

8. Fuel element according to Claim 7, characterized in that the holes are quadratic and no holes are located underneath the fuel-rod axes (40).

9. Fuel element for a nuclear reactor, with a bundle of mutually parallel fuel rods (1, 2, 3), arranged between a fuel-element head (H) and a fuel-element foot (F), having the following features:
the fuel-element foot contains a screen plate which extends virtually over the bundle cross-section and which is in one piece or is composed of part plates lying next to one another, and
holes for a coolant stream lead from the underside to the topside, the dimensions of which holes are selected according to the dimensions of foreign bodies to be screened out from the coolant stream,
characterized in that different webs (71, 72) pass through the holes at least in two planes lying between the underside and the topside.

10. Fuel element according to Claim 9, characterized in that the webs (61, 62) of one plane are arranged geometrically differently, particularly offset, relative to the webs (63, 64) of the other plane.

11. Fuel element according to Claim 9 or 10, characterized in that the holes are virtually round.

12. Fuel element for a nuclear reactor, with a bundle of mutually parallel fuel rods, arranged between a fuel-element head and a fuel-element foot, with a screen plate which extends in the fuel-element foot virtually over the bundle cross-section and which is in one piece or is composed of part plates, and with continuously curved passage channels (93, 94) leading from the underside to the topside of the plate.

## Revendications

1. Procédé pour la réalisation d'une plaque perforée (14) pour le pied d'un assemblage combustible, dont la section transversale du pied est adaptée à la section transversale de la plaque (14) et dont les dimensions d'ouvertures de tamisage (41) sont adaptées à celles de corps étrangers à retenir,
caractérisé par le fait que les ouvertures de tamisage (41) sont pratiquées par voie électrochimique dans la plaque (14) de façon à ce qu'au moins dans une zone partielle située entre la face inférieure et la face supérieure de la plaque (14), au moins une partie des ouvertures de tamisage (41) ait une section transversale présentant des sommets.

2. Procédé selon la revendication 1,
caractérisé par le fait que les ouvertures de tamisage sont pratiquées dans la plaque sur une partie (34) de sa longueur depuis la face supérieure de la plaque (14, 30) et sur une autre partie (31) de sa longueur depuis la face inférieure de la plaque.

3. Procédé selon la revendication 2,
caractérisé par le fait que les ouvertures de tamisage sont pratiquées dans la plaque depuis sa face supérieure avec une géométrie différente de celle pratiquée depuis sa face inférieure.

4. Procédé selon l'une des revendications 1 à 3,
caractérisé par le fait que les ouvertures de tamisage sont pratiquées dans la plaque de telle manière que plusieurs ouvertures (52) sont respectivement reliées à une face de la plaque par une partie d'ouverture commune (53).

5. Assemblage combustible pour un réacteur nucléaire comportant un faisceau de crayons combustibles (1, 3) disposés régulièrement côte à côte en rangées et en colonnes, maintenu, entre une tête d'assemblage combustible (H) et un pied d'assemblage combustible (F), et des éléments de structure porteurs tels que, par exemple, des tubes de guidage ou des crayons combustibles porteurs (2) présentant les caractéristiques suivantes :
Le pied de l'assemblage combustible comporte une plaque perforée (42, P) monobloc ou composée de plusieurs plaques partielles assemblées côte à côte, supportant au moins quelques éléments structurels qui s étendent pratiquement sur toute la section du faisceau et des ouvertures de passage (41, 45, 93) permettant le passage d'un flux de réfrigérant et qui sont pratiquées dans la plaque (42) depuis sa face inférieure vers sa face supérieure avec des dimensions choisies en fonction de celles des corps étrangers à tamiser dans le flux de réfrigérant, la section transversale de ces ouvertures présentant des sommets,
caractérisé par, respectivement, plusieurs ouvertures de passage de section transversale uniformément continue, allant de la face inférieure à la face supérieure et débouchant séparément dans un intervalle (s) entre quatre crayons combustibles ou éléments structurels.

6. Assemblage combustible selon la revendication 5,
caractérisé par le fait que les ouvertures de passage sont carrées et qu'il n'y a pas d'ouvertures de passage en dessous des axes des crayons combustibles.

7. Assemblage combustible pour un réacteur nucléaire, comportant un faisceau de crayons combustibles (1, 3) disposés régulièrement côte à côte en rangées et en colonnes et maintenu entre une tête d'assemblage combustible (H) et un pied d'assemblage combustible (F), et des éléments de structure porteurs tels que par exemple des tubes de guidage ou des crayons combustibles porteurs (2) présentant les caractéristiques suivantes :
Le pied de l'assemblage combustible comporte une plaque perforée (42, P) monobloc ou composée de plusieurs plaques partielles assemblées côte à côte, supportant au moins quelques éléments structurels qui s étendent pratiquement sur toute la section transversale du faisceau et des ouvertures de passage (41, 45, 93) permettant le passage d'un flux de réfrigérant et qui sont pratiquées dans la plaque (42) depuis sa face inférieure vers sa face supérieure avec des dimensions choisies en fonction de celles des corps étrangers à tamiser dans le courant de fluide réfrigérant, la section transversale de ces ouvertures présentant des sommets,
caractérisé par des trous continus (53) de section transversale approximativement circulaire ou approximativement carrée, adaptée à l'intervalle (S) entre les crayons combustibles, qui sont subdivisés dans une zone partielle entre la face inférieure et la face supérieure, par des réglettes planes (51) usinées dans la plaque, en ouvertures de passage (52).

8. Assemblage combustible selon la revendication 7,
caractérisé par le fait que les trous sont carrés et qu'il n'y a pas de trous en dessous des axes des crayons combustibles (40).

9. Assemblage combustible pour un réacteur nucléaire comportant un faisceau de crayons combustibles (1, 2, 3) parallèles, disposés entre une tête d'assemblage combustible (H) et un pied d'assemblage combustible (F), présentant les caractéristiques suivantes :
Le pied de l'assemblage combustible comporte une plaque perforée monobloc ou composée de plusieurs plaques partielles assemblées côte à côte, s'étendant pratiquement sur toute la section transversale du faisceau, avec des trous pour un courant de fluide réfrigérant, allant de la face inférieure à la face supérieure et dont les dimensions sont choisies en fonction de celles des corps étrangers à tamiser dans le flux de réfrigérant,
caractérisé par le fait que les trous sont munis de réglettes (71, 72) différentes au moins dans deux plans situées entre la face inférieure et la face supérieure.

10. Assemblage combustible selon la revendication 9,
caractérisé par le fait que les réglettes (61, 62) situées dans l'un des plans sont disposées géométriquement autrement que les réglettes (63, 64) situées dans l'autre plan, notamment sont décalées.

11. Assemblage combustible selon la revendication 9 ou 10,
caractérisé par le fait que les trous sont pratiquement circulaires.

12. Assemblage combustible pour un réacteur nucléaire, comportant un faisceau de crayons combustibles disposés parallèlement les uns par rapport aux autres entre une tête d'assemblage combustible et un pied d'assemblage combustible , une plaque perforée monobloc ou composée de plaques partielles assemblées, s'étendant pratiquement sur toute la section transversale du faisceau dans le pied de l'assemblage combustible, ainsi que de canaux de passage (93, 94) incurvés en continu et allant de la face inférieure vers la face supérieure de la plaque.
